Europäisches Patentamt

European Patent Office

Office européen des brevets

(19)

(11) **EP 1 220 485 A1**

(12) **EUROPEAN PATENT APPLICATION**

(43) Date of publication:
03.07.2002 Bulletin 2002/27

(51) Int Cl.$^7$: **H04L 1/18**

(21) Application number: **00403710.7**

(22) Date of filing: **29.12.2000**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **MOTOROLA, INC.**
**Schaumburg, IL 60196 (US)**

(72) Inventors:
• **Vialle, Sandrine**
**75015 Paris (FR)**

• **Vivier, Guillaume**
**75013 Paris (FR)**
• **Taffin, Arnaud**
**75014 Paris (FR)**

(74) Representative: **Kopacz, William James**
**83, Avenue Foch**
**75116 Paris (FR)**

(54) **Method and turbo decoder for use in a communications system employing repetitions of an information packet**

(57) A method provides efficient and low complexity turbo-decoding in a communications system employing repetitions of an information packet (ARQ). A number of repetitions of the received information and channel observations thereof are stored, and the channel observations are combined according to the formula

$$p(y = (\,y_1, y_2, ..., y_L\,)/x, \alpha = (\alpha_1, \alpha_{2,}..., \alpha_L)) = \prod_{i=1}^{L} p(y_i/x, \alpha_i)$$

to produce a combined channel observation that is used to subsequently turbo-decode the received information packet. This provides a very simple scheme offering very good performance.

keep/discard stored bit according to the result of decoding

new attempt → Store and Combine → Turbo-decoder →

112

114

110

FIG. 2

EP 1 220 485 A1

## Description

### Field of the Invention

This invention relates to turbo coding in communications systems using hybrid Automatic Re-transmission, or Repeat, reQuest (ARQ).

In a communications system, forward error coding is typically used to decrease the error rate at a receiver. In order to guarantee very low (and even zero) packet error rate, the receiver can ask for a re-transmission of an erroneously-received until it correctly receives the packet. Such a repetition scheme is referred to as ARQ. To improve the decoding process in the presence of multiple copies of the same packet, when decoding an $n^{th}$ copy, the receiver could use the previous copies. Such a hybrid error coding scheme is referred to as Hybrid ARQ (HARQ).

The invention relates to the specific case of Hybrid ARQ type-II where the packet is re-transmitted identically from one attempt to the other and where the receiver is able to store the previous identical transmissions.

The invention relates to the specific case of Turbo codes used as the forward error code in the communication system. Turbo coding is a well-known scheme of forward error coding where two simple convolutional coders/decoders are used. A turbo decoder uses a simple iterative decoding algorithm based on simple decoders individually matched to the simple constituent codes. The decoders exchange *a posteriori* likelihood estimates with each other and use *Maximum a Posteriori* algorithms. The turbo decoder iterates between the outputs of the constituent decoders until convergence to a final state in achieved.

### Background of the Invention

In the field of this invention several techniques have been proposed for using HARQ with convolutional codes.

From the paper 'A novel ARQ Technique using the Turbo Coding Principle' by K., R., Narayanan, IEEE Communications Letters, March 1997, there is known an ARQ scheme using turbo-codes. This technique uses the log-likelihood ratios generated by the decoder during a previous transmission as a priori information when decoding re-transmissions. When a first transmission fails, it re-encodes the information packet in a turbo-code manner (interleaving, then coding) and as a result achieves get a multiple turbo-coded combination whose constituent codes are turbo-codes. However, by re-encoding after the first transmission, the complexity of the arrangement is increased, and the encoder and decoder are different.

From the paper 'Turbo-Coded ARQ schemes for DS-CDMA Data Networks over Fading and Shadowing Channels' by Tingfang Ji, IEEE 1999, there is known a turbo-coded ARQ scheme with rate-compatible punctured turbo-codes. This scheme uses incremental redundancy, i.e., the re-transmitted packet is not the same as previous packets.

From the contribution 'TSGR1#6 890/99 Panasonic, Additional Information on link adaptation and ARQ type II/III', to the 3GPP WG1 consortium, different methods are presented for combining the same packet in case of soft handoff by weighting replicas by a parameter related to the channel (well known as Maximum Ratio combining). "Code Combining" is also presented, which is equivalent to rate-compatible punctured coding. However, these proposed schemes transmit additional (differently encoded) redundancy bits.

From patent publication EP 0948154A2 entitled 'Data Communication system and method using an hybrid ARQ scheme', by T. Ketseoglou, there is known a hybrid ARQ scheme adapted to a RAKE receiver. When applied in context of turbo-coding, different puncturing patterns are used, i.e., packets are retransmitted with different bits, increasing complexity.

Thus, the known approaches have the disadvantage of increased complexity when attempting to use turbo-codes.

A need therefore exists for method to provide efficient and low complexity turbo decoding with repetitions wherein the abovementioned disadvantage(s) may be alleviated.

### Statement of Invention

In accordance with a first aspect of the present invention there is provided a method to provide efficient and low complexity turbo decoding with repetitions as claimed in claim 1.

In accordance with a second aspect of the present invention there is provided a turbo-decoder, for use in a communications system employing repetitions of an information packet, as claimed in claim 3.

### Brief Description of the Drawings

One method to provide efficient and low complexity turbo decoding with repetitions incorporating the present invention will now be described, by way of example only, with reference to the accompanying drawing(s), in which:

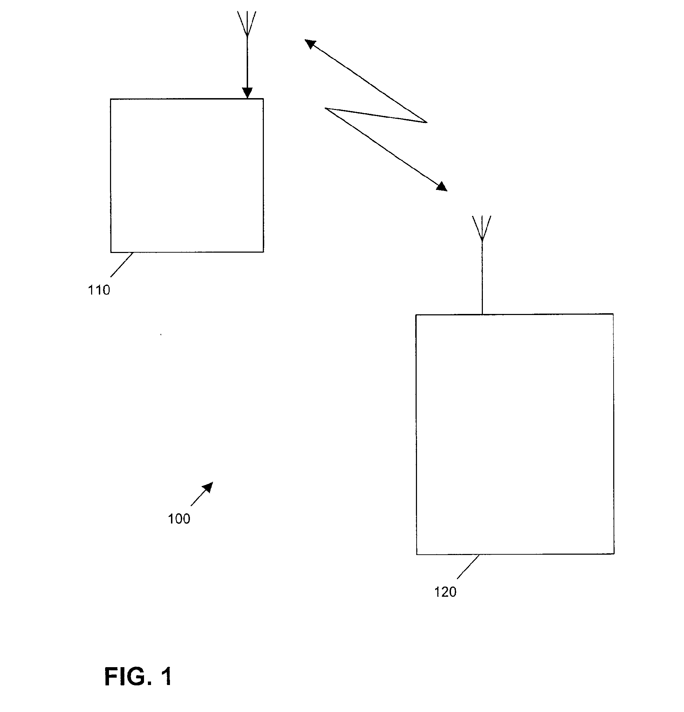

FIG. 1 shows a communications system incorporating the present invention;
FIG. 2 shows a block schematic diagram of a receiver of the system of FIG. 1; and
FIG. 3 shows a block schematic diagram of a channel model useful in understanding operation of the system of FIG. 1.

## Description of Preferred Embodiment(s)

In a system 100 incorporating the present invention, the receiver 110 is able to detect, as in classical hybrid schemes, that a packet has been correctly received or not. The receiver is also able to communicate to the transmitter 120 that the packet should be retransmitted or not.

Briefly stated, novelty lies in the following steps:

1) At the transmitter side: turbo-encoding the packet, then storing the encoded bits and finally sending them.
At the receiver side: storing the received bits, then trying to turbo-decode the first transmitted packet.

2) In case of successful transmission: discarding the stored bits both at transmitter and receiver and then transmitting a new packet (returning to step 1).

3) In case of unsuccessful transmission

At the transmitter: keeping the stored bits and retransmitting the packet.
At the receiver: combine the new received packet with the previous received packet (the method for combining the bits from new and previously-received packets is explained in detail below), then storing the combined packet and turbo-decoding it. This step is repeated until decoding is accurate.

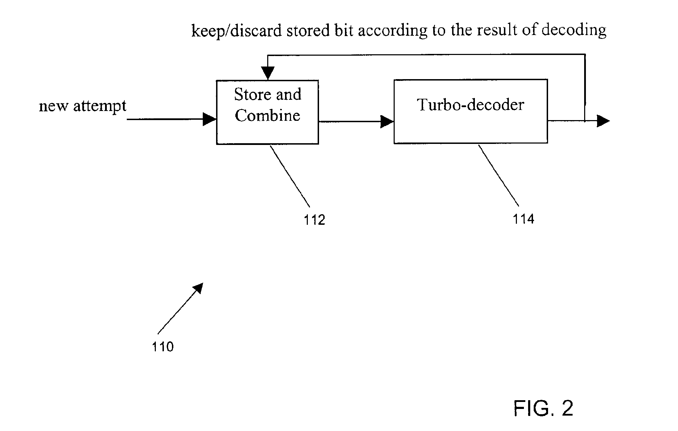

The receiver 110 is schematically represented in FIG. 2. Thus, the receiver has a store and combine unit 112 for receiving a new packet for attempted turbo decoding and for storing and combining (as will be explained in detail below) the packet with previously received packets in dependence on the result of subsequent turbo-decoding, and a turbo-decoding unit 114 for turbo-decoding the packet from the store and combine unit 112.

*Combination process*

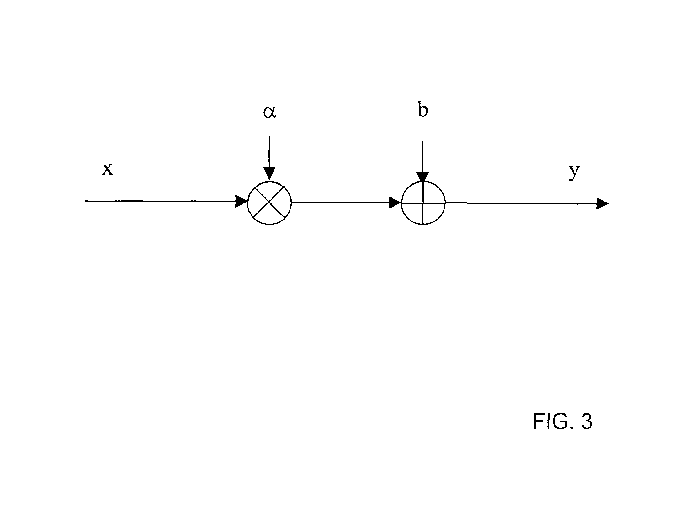

Considering the channel model shown in FIG. 3, x is the transmitted symbol, $\alpha$ is the Rayleigh fading, b is the Gaussian noise and y is the received symbol, and the channel state information is supposed to be perfectly known.

At the input of each elementary decoder of the turbo-decoder, two sorts of information are available:

1. the channel observation, i.e., the conditional probability $p(y/x,\alpha)$
2. the *a priori* probability on the transmitted symbol, $p(x)$

The combination process of the present invention concerns only the channel observations $p(y/x,\alpha)$.

Considering the L received replicas of x (where L re-transmissions of x have been required) and the fadings $\alpha 1, \alpha 2, ..., \alpha L$ experienced by x at each transmission, all these replicas are independent and so (by use of the Bayes' rule):

$$p(y = (y_1, y_2, \ldots, y_L)/x, \alpha = (\alpha_1, \alpha_{2,} \ldots, \alpha_L)) = \prod_{i=1}^{L} p(y_i / x, \alpha_i)$$

Consequently, in order to take into account in an optimal way the L replicas of the transmitted symbols, the present invention multiplies the L channel observations (probability form) and feeds the resulting product to the input of the elementary decoder to replace the channel observation corresponding usually to only one transmission.

It will be appreciated that the above explanation assumes that the turbo-decoder uses metrics based on probability or likelihood ratio (which is the case for all known turbo-decoders).

*Advantages*

It will be understood that in this way the invention allows efficient turbo-decoding of multiple transmissions of the same packet. Since the transmitter always transmits the same packet, the additional complexity (compared to a system not able to handle decoding of multiple copies) is very limited. There is no need to recode bits, or to change the pattern of puncturing. Only an additional memory is required.

In the same way, the additional complexity at the receiver is limited. The turbo-decoder remains unchanged. The combination process is very simple and requires limited storage and computational capacity.

The combination process is optimal and leads to an improvement of performance. Indeed, the combined packet is seen by the turbo-decoder with less fading and a better signal to noise ratio. Simulation results show improved Frame Error Rate, for a flat Rayleigh channel, with the turbo-code specified by the UMTS (interleaver size = 5114 bits).

The combination of two replicas (equivalent code rate of 1/4) results in a gain of 0.6 dB, whereas the use of four replicas (equivalent code rate of 1/8) permits to approach the Gaussian channel at 0.2 dB, with low complexity in the combining process.

In conclusion, it will be understood that the invention provides efficient and low complexity turbo decoding in a very simple scheme offering very good performance.

**Claims**

1. A method for turbo-decoding repetitions of an information packet in a communications system, the method comprising:

   receiving a first information packet and requesting re-transmission of the packet if the packet is in error;
   receiving at least one further transmission of the packet; and
   deriving channel observations p(y/x,α) for the received packets and combining the channel observations to produce a combined channel observation; and
   utilising the combined channel observation for subsequent turbo-decoding.

2. The method of claim 1 for use in a Rayleigh channel wherein the step of deriving channel observations p(y/x,α) for the received packets and combining the channel observations comprises combining the channel observations in accordance with the formula

$$p(y = (\, y_1, y_2, \ldots, y_L)/x, \alpha = (\alpha_1, \alpha_{2,} \ldots, \alpha_L)) = \prod_{i=1}^{L} p(y_i/x, \alpha_i)$$

   to produce a combined channel observation.

3. A turbo-decoder for use in a communications system employing repetitions of an information packet, the turbo-decoder comprising:

   means for storing a first received transmission of an information packet;
   means for deriving a channel observation for the first received transmission of an information packet;
   means for storing at least one subsequent received transmission of the information packet;
   means for deriving channel observations for the first received transmission of an information packet and the at least one subsequent received transmission of the information packet;
   means for combining the channel observations to produce a combined channel observation; and
   means for turbo-decoding the received information packet utilising the combined channel observation.

4. The turbo-decoder of claim 3 for use in a Rayleigh channel wherein the means for combining the channel observations comprises means for combining the channel observations in accordance with the formula

$$p(y = (\, y_1, y_2, \ldots, y_L)/x, \alpha = (\alpha_1, \alpha_{2,} \ldots, \alpha_L)) = \prod_{i=1}^{L} p(y_i/x, \alpha_i)$$

   to produce a combined channel observation.

FIG. 1

keep/discard stored bit according to the result of decoding

new attempt → | Store and Combine | → | Turbo-decoder | →

112          114

110

FIG. 2

α          b

x                                                  y

FIG. 3

**European Patent Office**

## EUROPEAN SEARCH REPORT

Application Number

EP 00 40 3710

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BANERJEE, A.; COSTELLO, D.J.; FUJA, T.E.: "Performance of hybrid ARQ schemes using turbo trellis coded modulation" IEEE WIRELESS COMMUNICATIONS AND NETWORKING CONFERENCE 2000, vol. 3, 23 - 28 September 2000, pages 1025-1029, XP002171942 * sections I, II-A, II-B, V * | 1-4 | H04L1/18 |
| Y | CHASE D: "CODE COMBINING - A MAXIMUM-LIKELIHOOD DECODING APPROACH FOR COMBINING AN ARBITRARY NUMBER OF NOISY PACKETS" IEEE TRANSACTIONS ON COMMUNICATIONS,US,IEEE INC. NEW YORK, vol. COM-33, no. 5, May 1985 (1985-05), pages 385-393, XP000758537 ISSN: 0090-6778 * sections I, II-preamble, II-B, II-C * * figure 1 * | 1-4 | |
| Y | BANERJEE A ET AL: "Bandwidth efficient hybrid ARQ schemes using turbo codes" 2000 IEEE INTERNATIONAL SYMPOSIUM ON INFORMATION THEORY;SORRENTO, ITALY JUN 25-30 2000, 2000, page 188 XP002171943 IEEE Int Symp Inf Theor Proc;IEEE International Symposium on Information Theory - Proceedings 2000 * the whole document * | 1-4 | **TECHNICAL FIELDS SEARCHED (Int.Cl.7)** <br><br>H04L |
| | -/-- | | |

The present search report has been drawn up for all claims

| Place of search | Date of completion of the search | Examiner |
|---|---|---|
| THE HAGUE | 13 July 2001 | Borges, P |

EPO FORM 1503 03.82 (P04C01)

European Patent Office

**EUROPEAN SEARCH REPORT**

Application Number

EP 00 40 3710

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | NARAYANAN K R ET AL: "Turbo decoding for packet data systems" PROCEEDINGS OF THE 1997 IEEE GLOBAL TELECOMMUNICATIONS MINI-CONFERENCE;PHOENIX, AZ, USA NOV 3-8 1997, vol. 4, 1997, pages 44-48, XP002171944 Conf Rec IEEE Global Telecommun Conf;Conference Record / IEEE Global Telecommunications Conference 1997 IEEE, Piscataway, NJ, USA * section I , IV-preamble * | 1-4 | |
| A | BIGLIERI E ET AL: "Fading channels: information-theoretic and communications aspects" IEEE TRANSACTIONS ON INFORMATION THEORY, OCT. 1998, IEEE, USA, vol. 44, no. 6, pages 2619-2692, XP002171945 ISSN: 0018-9448 * the whole document * | 1-4 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 13 July 2001 | Borges, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)